(19) Europäisches Patentamt
European Patent Office
Office européen des brevets

(11) Veröffentlichungsnummer: **0 059 686**
**B1**

(12) # EUROPÄISCHE PATENTSCHRIFT

(45) Veröffentlichungstag der Patentschrift: **13.02.85**

(51) Int. Cl.⁴: **C 07 C 69/743**, C 07 C 121/75, A 01 N 53/00

(21) Anmeldenummer: **82810085.9**

(22) Anmeldetag: **22.02.82**

(54) **Cyclopropankarbonsäureester, Verfahren zu ihrer Herstellung und ihre Verwendung in der Schädlingsbekämpfung.**

(30) Priorität: **26.02.81 CH 1298/81**
**13.10.81 CH 6540/81**

(43) Veröffentlichungstag der Anmeldung: **08.09.82 Patentblatt 82/36**

(45) Bekanntmachung des Hinweises auf die Patenterteilung: **13.02.85 Patentblatt 85/7**

(84) Benannte Vertragsstaaten: **AT BE CH DE FR GB IT LI NL**

(56) Entgegenhaltungen: **EP - A - 0 008 333**

(73) Patentinhaber: **CIBA-GEIGY AG, Postfach, CH-4002 Basel (CH)**

(72) Erfinder: **Ackermann, Peter, Dr., Reichensteinerstrasse 12, CH-4153 Reinach (CH)**
Erfinder: **Gsell, Laurenz, Dr., Maiengasse 56, CH-4056 Basel (CH)**
Erfinder: **Wehrli, Rudolf, Dr., Dianastrasse 2, CH-4310 Rheinfelden (CH)**

**EP 0 059 686 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Cyclopropankarbonsäureester der Formel

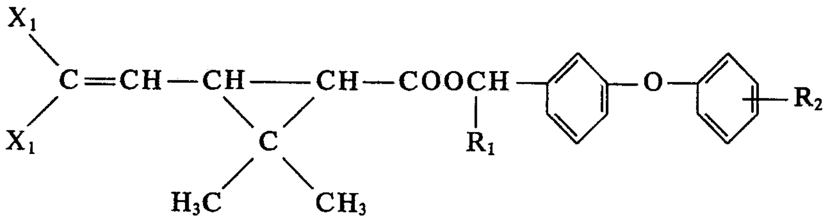

(I)

worin

$X_1$ Methyl oder Halogen,
$R_1$ Wasserstoff, Cyano, $-CSNH_2$, Allenyl, $C_2-C_3$-Alkenyl oder $C_2-C_3$-Alkinyl und
$R_2$ gegebenenfalls durch Cyano, Brom, Jod, Hydroxy, $C_1-C_6$-Alkyl, $C_1-C_6$-Hydroxyalkyl, $C_1-C_6$-Halogenalkyl, Dimethylamin oder Phenyl substituiertes $C_2-C_6$-Alkenyl oder $C_2-C_6$-Alkinyl bedeuten;

Verfahren zu ihrer Herstellung und ihre Verwendung in der Schädlingsbekämpfung.

Unter Halogen ist bei $X_1$ Fluor, Chlor oder Brom zu verstehen.

Die für $R_1$ und $R_2$ in Frage kommenden Alkenyl- oder Alkinylgruppen können geradkettig oder verzweigt sein. Bei $R_2$ haben die Alkenyl- und Alkinylgruppen in der Kette bevorzugt 2 bis 3 Kohlenstoffatome.

Besonders bevorzugte Alkenyl- oder Alkinylgruppen sind bei $R_2$ Vinyl, 1-Propenyl, Äthinyl, Jodäthinyl oder 1-Propinyl.

Bevorzugt sind Verbindungen der Formel I, worin $X_1$ Fluor, Chlor oder Brom, $R_1$ Wasserstoff oder Cyano und $R_2$ Vinyl, 1-Propenyl, Äthinyl, Jodäthinyl oder 1-Propinyl bedeuten.

Insbesondere bevorzugt sind aber Verbindungen der Formel I, worin $X_1$ Fluor, Chlor oder Brom, $R_1$ Wasserstoff oder Cyano und $R_2$ p-Vinyl, p-1-Propenyl, p-Äthinyl, p-Jodäthinyl oder p-1-Propinyl bedeuten.

In der Europäischen Patentanmeldung Nr. 0 008 333 werden $\alpha$-Prop-1-inyl-3-phenoxybenzylalkohole beschrieben, welche im Phenoxyteil durch Halogen, $C_1-C_4$-Alkyl-, $C_1-C_3$-Alkoxy-, Cyano- oder Dimethylaminogruppen substituiert sein können.

Die Verbindungen der Formel I werden nach an sich bekannten Methoden, z. B. wie folgt hergestellt:

1)

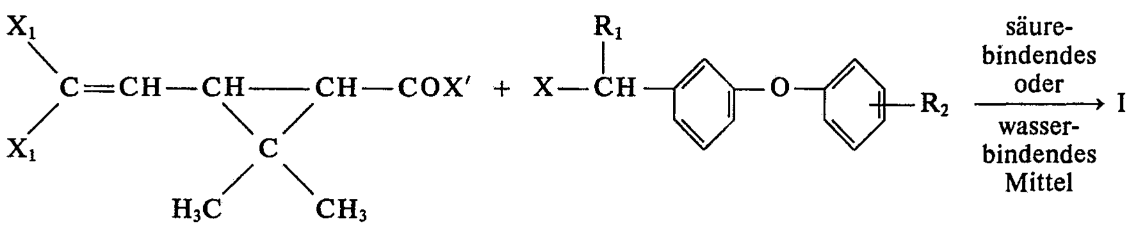


(II) (III)

2)

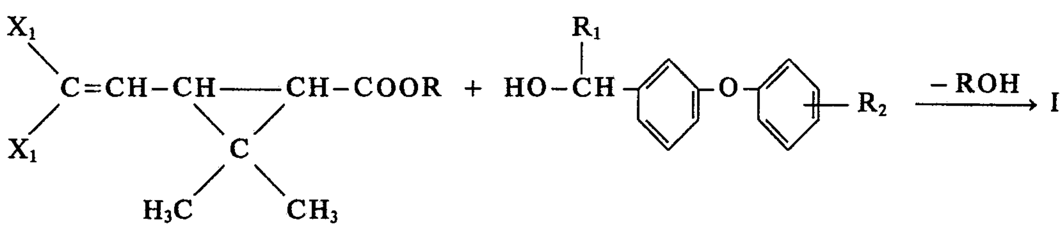


(IV) (V)

In den Formeln II bis V haben $X_1$, $R_1$ und $R_2$ die für die Formel I angegebene Bedeutung. In den Formeln II und III stehen die Symbole X und X' je für eine Hydroxylgruppe oder eines der Symbole X und X' für eine Hydroxylgruppe und das andere für ein Halogenatom, insbesondere für Chlor oder Brom, und in der Formel IV steht R für $C_1-C_4$-Alkyl, insbesondere für Methyl oder Äthyl.

Als säurebindende Mittel für das Verfahren 1 kommen insbesondere tertiäre Amine, wie Trialkylamin und Pyridin, ferner Hydroxide, Oxide, Carbonate und Bicarbonate von Alkali- und Erdalkalimetallen sowie Alkalimetallalkoholate, wie z. B. Kalium-t.butylat oder Natriummethylat in Betracht. Als wasserbindendes Mittel für das Verfahren 1 kann z. B. Dicyclohexylcarbodiimid verwendet werden. Die Verfahren 1 und 2 werden bei einer Reaktionstemperatur zwischen −10 und 120°C, meist zwischen 20 und 80°C, bei normalem oder erhöhtem Druck und vorzugsweise in einem inerten Lösungs- oder Verdünnungsmittel durchgeführt. Als Lösungs- und Verdünnungsmittel eignen sich z. B. Äther oder ätherartige Verbindungen, wie Diäthyläther, Dipropyläther, Dioxan, Dimethoxyäthan und Tetrahydrofuran; Amide, wie N,N-dialkylierte Carbonsäureamide; aliphatische, aromatische sowie halogenierte Kohlenwasserstoffe, insbesondere Benzol, Toluol, Xylole, Chloroform und Chlorbenzol; Nitrile wie Acetonitril; Dimethylsulfoxid und Ketone wie Aceton und Methyläthylketon.

Die Ausgangsstoffe der Formeln II bis V sind bekannt oder können analog bekannten Methoden hergestellt werden.

Die Verbindungen der Formel I liegen als Gemisch von verschiedenen optisch aktiven Isomeren vor, wenn bei der Herstellung nicht einheitlich optisch aktive Ausgangsmaterialien verwendet werden. Die verschiedenen Isomerengemische können nach bekannten Methoden in die einzelnen Isomeren aufgetrennt werden. Unter der Verbindung der Formel I versteht man sowohl die einzelnen Isomeren, als auch deren Gemische.

Die Verbindungen der Formel I eignen sich zur Bekämpfung von verschiedenartigen Schädlingen an Tieren und Pflanzen.

Insbesondere eignen sich die Verbindungen der Formel I zur Bekämpfung von Insekten, z. B. der Ordnung Lepidoptera, Coleoptera, Homoptera, Heteroptera, Diptera, Thysanoptera, Anoplura, Siphonaptera,Mallophaga, Thysanura, Isoptera, Psocoptera und Hymenoptera, und von Milben und Zecken der Ordnung Akarina.

Vor allem eignen sich die Verbindungen der Formel I zur Bekämpfung von pflanzenschädigenden Insekten, insbesondere pflanzenschädigenden Fraßinsekten, in Zier- und Nutzpflanzen, insbesondere in Baumwollkulturen (z. B. Spodoptera littoralis und Heliothis virescens), Gemüsekulturen (z. B. Leptinotarsa decemlineata und Myzus persicae), Reiskulturen (z. B. Chilo suppressalis und Laodelphax striatellus) und Obstkulturen (z. B. Laspeyresia pomonella und Adoxophyses).

Die Wirkstoffe der Formel I zeigen auch eine sehr günstige Wirkung gegen Fliegen, wie z. B. Musca domestica und Mückenlarven.

Die akarizide bzw. insektizide Wirkung läßt sich durch Zusatz von anderen Insektiziden und/oder Akariziden wesentlich verbreitern und an gegebene Umstände anpassen. Als Zusätze eignen sich z. B. organische Phosphorverbindungen; Nitrophenole und deren Derivate; Formamidine; Harnstoffe; andere pyrethrinartige Verbindungen sowie Karbamate und chlorierte Kohlenwasserstoffe.

Mit besonderem Vorteil werden die Verbindungen der Formel I auch mit Substanzen kombiniert, welche einen synergistischen oder verstärkenden Effekt auf Pyrethroide ausüben. Beispiele solcher Verbindungen sind u. a. Piperonylbutoxid, Propinyläther, Propinyloxime, Propinylkarbamate und Propinylphosphonate, 2-(3,4-Methylendioxyphenoxy)-3,6,9-trioxaundecan (Sesamex resp. Sesoxane), S,S,S-Tributylphosphorotrithionate, 1,2-Methylendioxy-4-(2-octylsulfinyl)-propyl)-benzol.

Die Verbindungen der Formel I werden in unveränderter Form oder vorzugsweise zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Gießen werden gleich wie die Art der Mittel den angestrebten Zielen und den gegebenen Verhältnissen entsprechend gewählt.

Die Formulierungen d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln wie z. B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Äther und Ester, wie Äthanol, Äthylenglykol, Äthylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnußöl oder Sojaöl; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbrsserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer

oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}-C_{22}$), wie z. B. die Na- oder K-Salze der Öl- oder Stearinsäure, oder von natürlichen Fettsäuregemischen, die z. B. aus Kokosnuß- oder Talgöl gewonnen werden können. Ferner sind auch die Fettsäure-methyl-taurinsalze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschließt, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxid-Addukten. Die sulfonierten Benzimidazolderivate enthalten vorzugsweise 2 Sulfonsäuregruppen und einen Fettsäurerest mit 8—22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehyd-Kondensationsproduktes.

Ferner kommen auch entsprechende Phosphate wie z. B. Salze des Phosphorsäureesters eines p-Nonylphenyl-(4-14)-Äthylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Äthylenglykoläthergruppen und 10 bis 100 Propylenglykoläthergruppen enthaltenden Polyäthylenoxid-Addukte an Polypropylenglykol, Äthylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykoleinheiten.

Als Beispiele nichtionischer Tenside seien Nonylphenolpolyäthoxyäthanole, Ricinusölpolyglykoläther, Polypropylenpolyäthylenoxid-Addukte, Tributylphenoxypolyäthoxyäthanol, Polyäthylenglykol und Octylphenoxypolyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthaltend und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z. B. das Stearyltrimethylammoniumchlorid oder das Benzyldi(2-chloräthyl)äthylammoniumbromid.

Die in der Formulierungstechnik gebräuchlichen Tenside sind u. a. in folgender Publikation beschrieben:

»McCutcheon's Detergents and Emulsifiers Annual« MC Publishing Corp., Ridgewood, New Jersey, 1979.

Die pestiziden Zubereitungen enthalten in der Regel 0,1 bis 99 %, insbesondere 0,1 bis 95 %, Wirkstoff der Formel I, 1 bis 99,9 % eines festen oder flüssigen Zusatzstoffes und 0 bis 25 %, insbesondere 0,1 bis 25, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele für flüssige Wirkstoffe der Formel I
(%= Gewichtsprozent)

1. Emulsions-Konzentrate

| | a) | b) | c) |
|---|---|---|---|
| Wirkstoff | 20% | 40% | 50% |
| Ca-Dodecylbenzolsulfonat | 5% | 8% | 5,8% |
| Ricinusölpolyäthylenglykoläther (36 Mol AeO) | 5% | – | – |
| Tributylphenolpolyäthylenglykoläther (30 Mol AeO) | – | 12% | 4,2% |
| Cyclohexanon | – | 15% | 20% |
| Xylolgemisch | 70% | 25% | 20% |

Aus solchen Konzentraten können durch Verdünnen mit Wasser Emulsionen jeder gewünschten Konzentration hergestellt werden.

2. Lösungen

| | a) | b) | c) | d) |
|---|---|---|---|---|
| Wirkstoff | 80% | 10% | 5% | 95% |
| Äthylenglykolmonomethyläther | 20% | – | – | – |
| Polyäthylenglykol MG 400 | – | 70% | – | – |
| N-Methyl-2-pyrrolidon | – | 20% | – | – |
| Epoxidiertes Kokosnußöl | – | – | 1% | 5% |
| Benzin (Siedegrenzen 160–190°C) | – | – | 94% | – |

Die Lösungen sind zur Anwendung in Form kleinster Tropfen geeignet.

3. Granulate

| | a) | b) |
|---|---|---|
| Wirkstoff | 5% | 10% |
| Kaolin | 94% | – |
| Hochdisperse Kieselsäure | 1% | – |
| Attapulgit | – | 90% |

Der Wirkstoff wird in Methylenchlorid gelöst, auf den Träger aufgesprüht und das Lösungsmittel anschließend im Vakuum abgedampft.

4. Stäubemittel

| | a) | b) |
|---|---|---|
| Wirkstoff | 2% | 5% |
| Hochdisperse Kieselsäure | 1% | 5% |
| Talkum | 97% | — |
| Kaolin | — | 90% |

Durch inniges Vermischen der Trägerstoffe mit dem Wirkstoff erhält man gebrauchsfertige Stäubemittel.

Formulierungsbeispiele für feste Wirkstoffe der Formel I
(% = Gewichtsprozent)

5. Spritzpulver

| | a) | b) |
|---|---|---|
| Wirkstoff | 20% | 60% |
| Na-Ligninsulfonat | 5% | 5% |
| Na-Laurylsulfat | 3% | — |
| Na-Diisobutylnaphthalinsulfonat | — | 6% |
| Octylphenolpolyäthylenglykoläther | — | 2% |
| Hochdisperse Kieselsäure | 5% | 27% |
| Kaolin | 67% | — |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

6. Emulsions-Konzentrat

| | |
|---|---|
| Wirkstoff | 10% |
| Octylphenolpolyäthylenglykoläther (4—5 Mol AeO) | 3% |
| Ca-Dodecylbenzolsulfonat | 3% |
| Ricinusölpolyglykoläther (36 Mol AeO) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

7. Stäubemittel

| | a) | b) |
|---|---|---|
| Wirkstoff | 5% | 8% |
| Talkum | 95% | – |
| Kaolin | – | 92% |

Man erhält anwendungsfertige Stäubemittel, indem der Wirkstoff mit dem Träger vermischt und auf einer geeigneten Mühle vermahlen wird.

8. Extruder Granulat

| | |
|---|---|
| Wirkstoff | 10% |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschließend im Luftstrom getrocknet.

9. Umhüllungs-Granulat

| | |
|---|---|
| Wirkstoff | 3% |
| Polyäthylenglykol (MG 200) | 3% |
| Kaolin | 94% |

Der fein gemahlene Wirkstoff wird in einem Mischer auf das mit Polyäthylenglykol angefeuchtete Kaolin gleichmäßig aufgetragen. Auf diese Weise erhält man staubfreie Umhüllungs-Granulate.

10. Suspensions-Konzentrat

| | |
|---|---|
| Wirkstoff | 40% |
| Äthylenglykol | 10% |
| Nonylphenolpolyäthylenglykoläther (15 Mol AeO) | 6% |
| Na-Ligninsulfonat | 10% |
| Carboxymethylcellulose | 1% |
| 37%ige wäßrige Formaldehyd-Lösung | 0,2% |
| Silikonöl in Form einer 75%igen wäßrigen Emulsion | 0,8% |
| Wasser | 32% |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Beispiel 1

### Herstellung von 1-[3'-(p-Äthinyl-phenoxy)-benzyl]-2,2-dimethyl-3-(2',2'-dichlorvinyl)-cyclopropancarboxylat

Bei 0°C tropft man zu einer Lösung von 2,74 g Verbindung der Formel

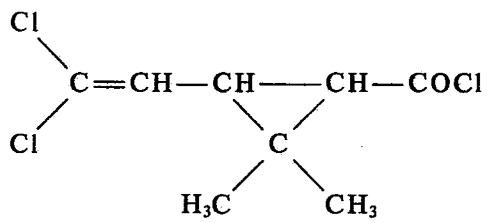

in 20 ml Toluol nacheinander 1,26 ml Pyridin und 2,7 g der Verbindung der Formel

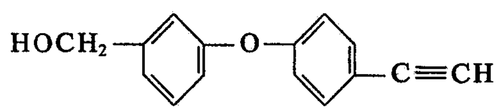

gelöst in 20 ml Toluol. Nach 12stündigem Rühren bei 20°C wird das Reaktionsgemisch auf 2 n-Salzsäure gegossen. Die organische Phase wird je einmal mit 10%iger Kaliumkarbonat-, gesättigter Natriumbikarbonat- und gesättigter Kochsalzlösung extrahiert, filtriert, über Magnesiumsulfat getrocknet und eingeengt. Nach dem Chromatographieren des Rohproduktes an Kieselgel mit Äther/Hexan (1 : 10) als Eluiermittel erhält man die Verbindung der Formel

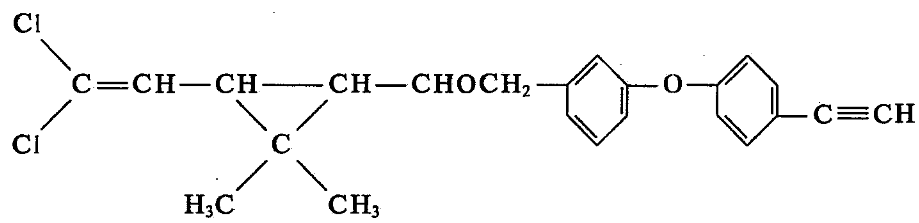

mit einer Refraktion von $n_D^{20°} = 1,5841$.

Auf analoge Weise werden auch folgende Verbindungen hergestellt:

Verbindungen

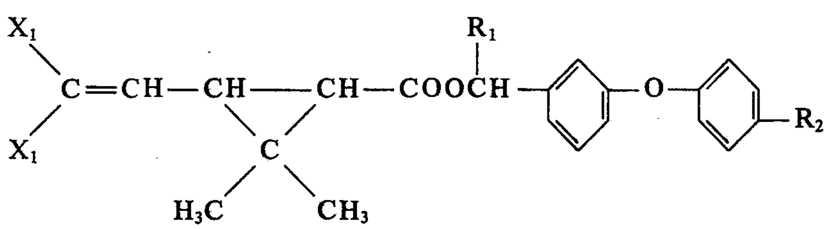

| $X_1$ | $R_1$ | $R_2$ | Physikalische Daten |
|---|---|---|---|
| Cl | CN | $—C{\equiv}CH$ | $n_D^{20°} = 1,5809$ |
| Cl | CN | $—C{\equiv}C—CH_3$ | $n_D^{30°} = 1,5770$ |

Fortsetzung

| $X_1$ | $R_1$ | $R_2$ | Physikalische Daten |
|---|---|---|---|
| Br | CN | $-C{\equiv}CH$ | $n_D^{30°} = 1{,}5916$ |
| Br | CN | $-C{\equiv}C-CH_3$ | $n_D^{20°} = 1{,}5969$ |
| F | CN | $-C{\equiv}CH$ | $n_D^{25°} = 1{,}5530$ |
| F | CN | $-C{\equiv}C-CH_3$ | $n_D^{30°} = 1{,}5525$ |
| Cl | CN | $-CH{=}CH_2$ | $n_D^{25°} = 1{,}5741$ |
| Cl | CN | $-C{\equiv}CJ$ | $n_D^{30°} = 1{,}600$ |
| Cl | H | $-CH{=}CH-CH_3$ | $n_D^{20°} = 1{,}5790$ |
| $CH_3$ | CN | $-C{\equiv}CH$ | $n_D^{30°} = 1{,}5613$ |
| Cl | CN | $-CH{=}CH-CH_3$ | $n_D^{20°} = 1{,}5762$ |
| Cl | $-C{\equiv}CH$ | $-C{\equiv}C-CH_3$ | $n_D^{30°} = 1{,}5819$ |
| Cl | $-CH{=}C{=}CH_2$ | $-C{\equiv}C-CH_3$ | $n_D^{30°} = 1{,}5899$ |
| Cl | H | $-CH{=}CH_2$ | $n_D^{30°} = 1{,}5781$ |
| Cl | CN | $-C{\equiv}C-CH_2-N(CH_3)_2$ | $n_D^{30°} = 1{,}5668$ |
| Cl | CN | $-C{\equiv}C-CH_2-N(CH_3)_2$ | $n_D^{30°} = 1{,}5679$ |

## Beispiel 2

### Insektizide Fraßgift-Wirkung: Laspeyresia pomonella

10 Diätwürfel werden mit einer Versuchslösung, enthaltend 10, 50, 100, 200 oder 400 ppm der zu prüfenden Verbindung besprüht.

Nach dem Antrocknen des Belages werden die Diätwürfel mit je 2 Larven der Spezies Laspeyresia pomonella ($L_1$-Stadium) besetzt. Die Auswertung der erzielten Abtötungsrate erfolgt nach 48 Stunden. Der Versuch wird bei 24°C und 60% relativer Luftfeuchtigkeit durchgeführt.

Die Verbindungen gemäß dem Herstellungsbeispiel 1 zeigen die in der folgenden Tabelle angegebene Wirkung gegen Larven der Spezies Laspeyresia pomonella.

### Biologische Versuchsergebnisse

In der folgenden Tabelle sind Versuchsergebnisse auf der Basis des vorstehenden Beispiels aufgeführt, und zwar mit folgendem Bewertungsindex in bezug auf die prozentuale Abtötung der Schädlinge:

A: 70–100% Abtötung bei 10 ppm Wirkstoffkonzentration

B: 70–100% Abtötung bei 50 ppm Wirkstoffkonzentration

C: 70–100% Abtötung bei 100 ppm Wirkstoffkonzentration

D: 70–100% Abtötung bei 200 ppm Wirkstoffkonzentration

E: 70–100% Abtötung bei 400 ppm Wirkstoffkonzentration

Verbindungen

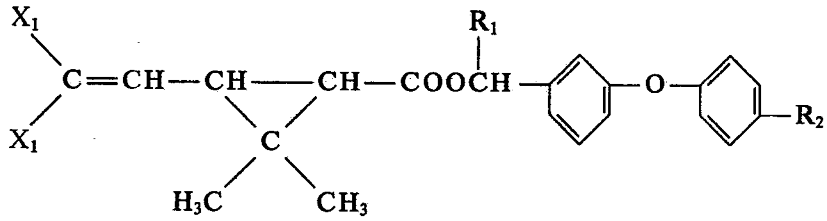

| $X_1$ | $R_1$ | $R_2$ | Wirksamkeit gegenüber Laspeyresia pomonella $L_1$-Larven |
|---|---|---|---|
| Cl | H | $-C{\equiv}CH$ | A |
| Cl | CN | $-C{\equiv}CH$ | A |
| Cl | CN | $-C{\equiv}C-CH_3$ | A |
| Br | CN | $-C{\equiv}CH$ | A |
| Br | CN | $-C{\equiv}C-CH_3$ | A |
| F | CN | $-C{\equiv}CH$ | A |
| F | CN | $-C{\equiv}C-CH_3$ | A |
| Cl | CN | $-CH{=}CH_2$ | B |
| Cl | CN | $-C{\equiv}CJ$ | A |
| Cl | H | $-CH{=}CH-CH_3$ | A |
| $CH_3$ | CN | $-C{\equiv}CH$ | A |
| Cl | CN | $-CH{=}CH-CH_3$ | A |
| Cl | $-C{\equiv}CH$ | $-C{\equiv}C-CH_3$ | E |
| Cl | $-CH{=}C{=}CH_2$ | $-C{\equiv}C-CH_3$ | E |

**Patentansprüche**

1. Cyclopropankarbonsäureester der Formel

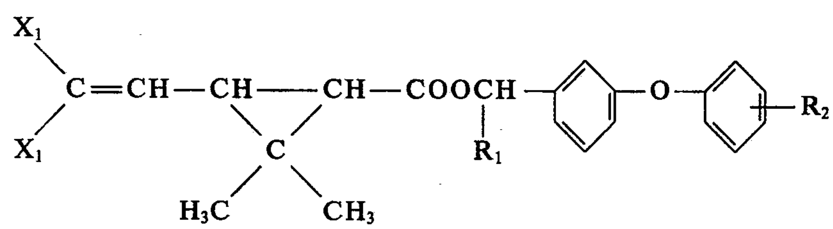

worin

$X_1$ Methyl oder Halogen,
$R_1$ Wasserstoff, Cyano, $-CSNH_2$, Alkyl, $C_2-C_3$-Alkenyl oder $C_2-C_3$-Alkinyl und
$R_2$ gegebenenfalls durch Cyano, Brom, Jod, Hydroxy, $C_1-C_6$-Alkyl, $C_1-C_6$-Hydroxyalkyl, $C_1-C_6$-Halogenalkyl, Dimethylamin oder Phenyl substituiertes $C_2-C_6$-Alkenyl oder $C_2-C_6$-Alkinyl bedeutet.

2. Eine Verbindung gemäß Anspruch 1, worin $X_1$ Fluor, Chlor oder Brom, $R_1$ Wasserstoff oder Cyano und $R_2$ Vinyl, 1-Propenyl, Äthinyl, Jodäthinyl oder 1-Propinyl bedeuten.

3. Eine Verbindung gemäß Anspruch 2, worin $X_1$ Fluor, Chlor oder Brom, $R_1$ Wasserstoff oder Cyano und $R_2$ p-Vinyl, p-1-Propenyl, p-Äthinyl, p-Jodäthinyl oder p-1-Propinyl bedeuten.

4. Die Verbindung gemäß Anspruch 3 der Formel

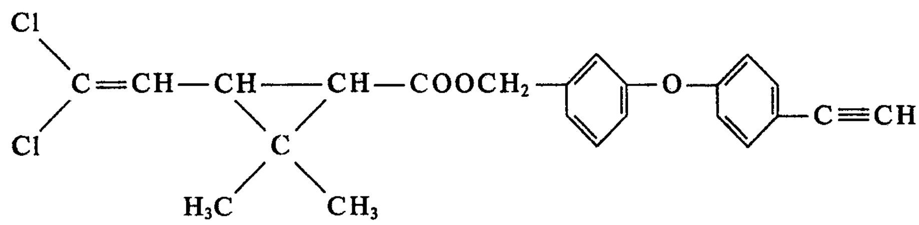

5. Die Verbindung gemäß Anspruch 3 der Formel

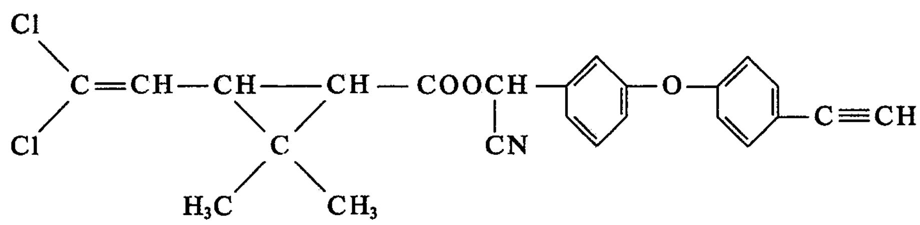

6. Die Verbindung gemäß Anspruch 3 der Formel

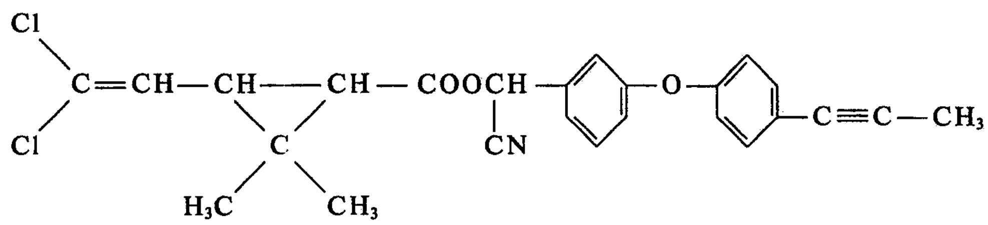

7. Die Verbindung gemäß Anspruch 3 der Formel

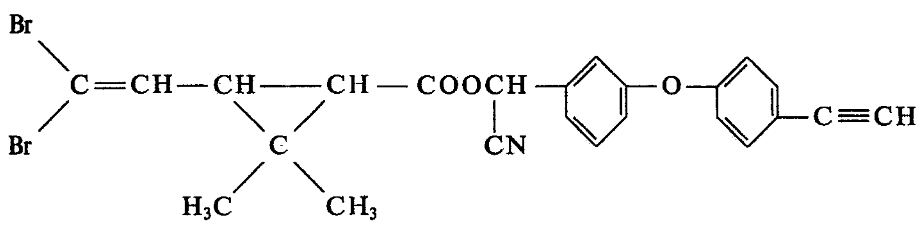

8. Die Verbindung gemäß Anspruch 3 der Formel

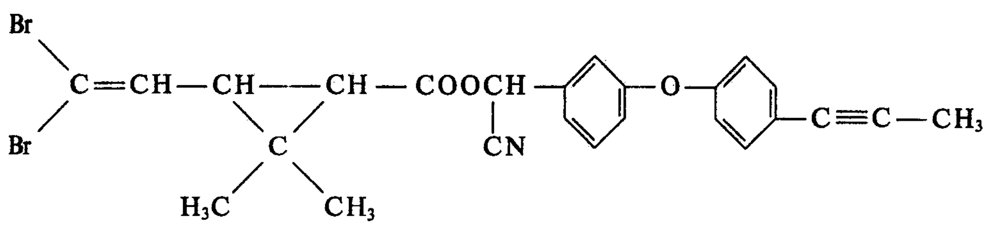

9. Die Verbindung gemäß Anspruch 3 der Formel

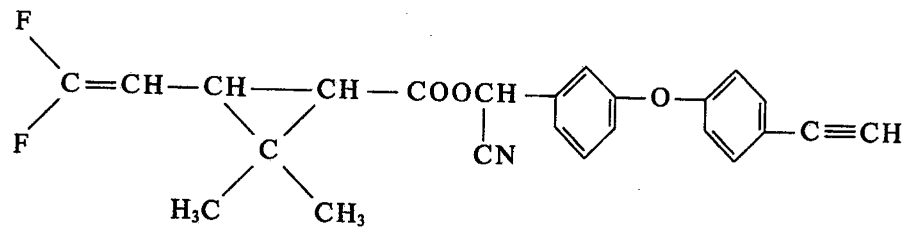

10. Die Verbindung gemäß Anspruch 3 der Formel

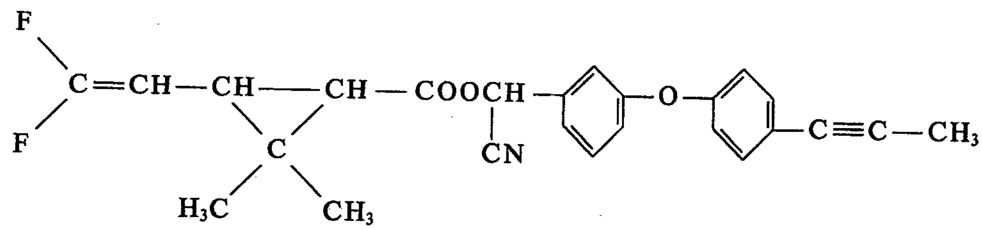

11. Die Verbindung gemäß Anspruch 3 der Formel

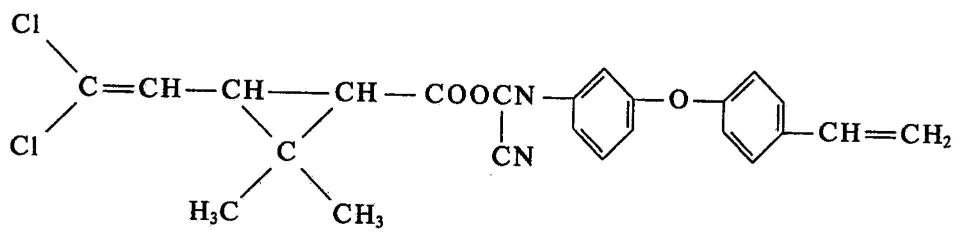

12. Die Verbindung gemäß Anspruch 3 der Formel

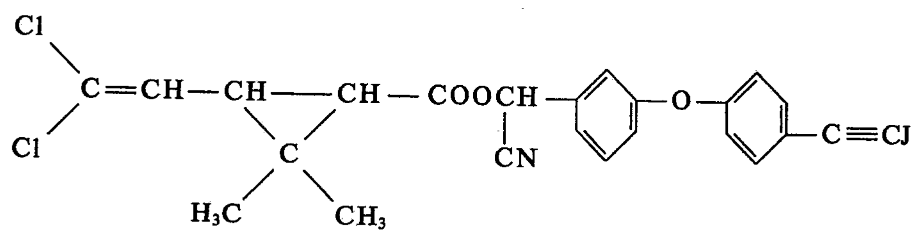

13. Die Verbindung gemäß Anspruch 3 der Formel

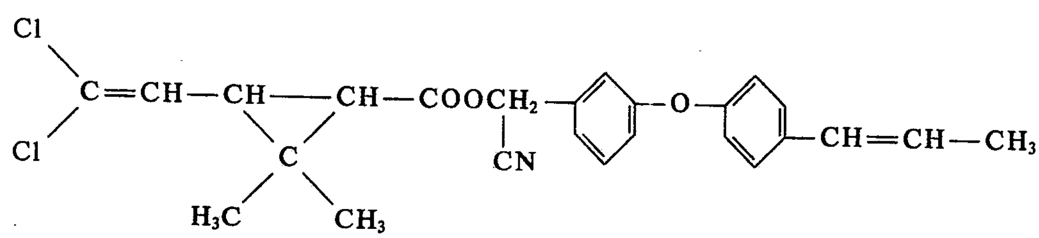

14. Die Verbindung gemäß Anspruch 1 der Formel

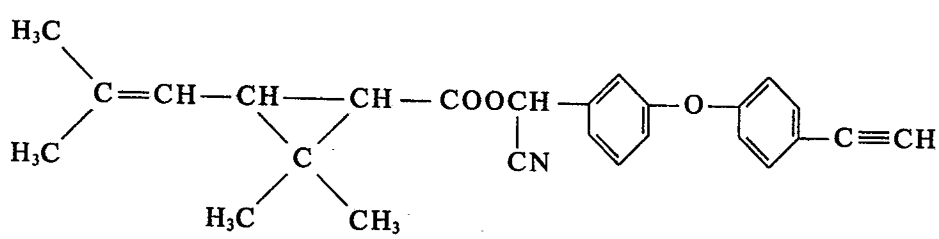

15. Die Verbindung gemäß Anspruch 1 der Formel

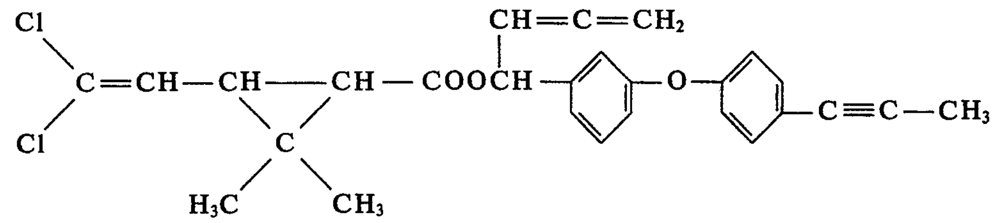

16. Die Verbindung gemäß Anspruch 1 der Formel

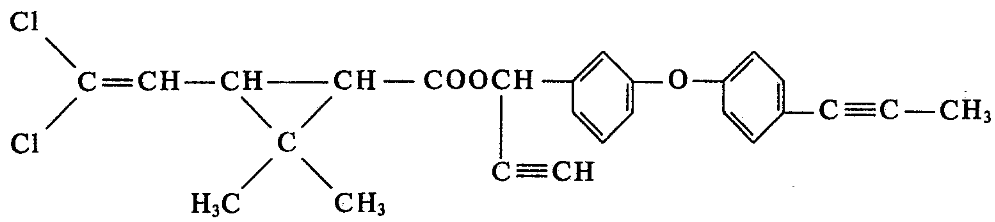

17. Die Verbindung gemäß Anspruch 3 der Formel

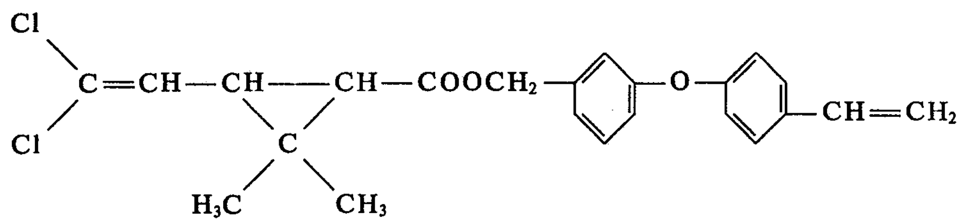

18. Ein Verfahren zur Herstellung von Verbindungen gemäß Anspruch 1, dadurch gekennzeichnet, daß man in Gegenwart eines säurebindenden oder wasserbindenden Mittels eine Verbindung der Formel

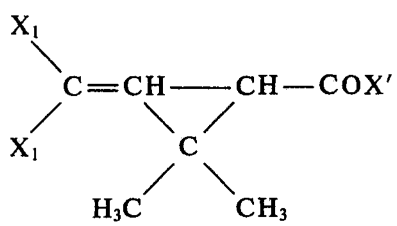

mit einer Verbindung der Formel

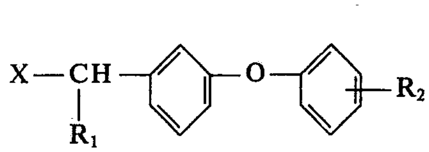

umsetzt, worin $X_1$, $R_1$ und $R_2$ die im Anspruch 1 angegebene Bedeutung haben und X' und X je für eine Hydroxylgruppe oder eines dieser Symbole für eine Hydroxylgruppe und das andere für ein Halogenatom steht.

19. Ein Schädlingsbekämpfungsmittel, welches als aktive Komponente eine Verbindung gemäß Anspruch 1 enthält.

20. Die Verwendung einer Verbindung gemäß Anspruch 1 zur Bekämpfung von Schädlingen an Tieren und Pflanzen.

21. Die Verwendung gemäß Anspruch 18 zur Bekämpfung von Insekten und Vertretern der Ordnung Akarina.

## Claims

1. A cyclopropanecarboxylic acid ester of the formula

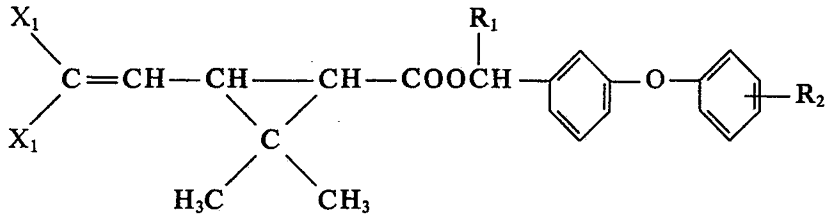

wherein $X_1$ is methyl or halogen, $R_1$ is hydrogen, cyano, $-CSNH_2$, alkyl, $C_2-C_3$alkenyl or $C_2-C_3$alkynyl, and $R_2$ is $C_2-C_6$alkenyl or $C_2-C_6$alkynyl which is unsubstituted or substituted by cyano, bromine, iodine, hydroxy, $C_1-C_6$alkyl, $C_1-C_6$hydroxyalkyl, $C_1-C_6$haloalkyl, dimethylamine or phenyl.

2. A compound according to claim 1, wherein $X_1$ is fluorine, chlorine or bromine, $R_1$ is hydrogen or cyano and $R_2$ is vinyl, 1-propenyl, ethynyl, iodoethynyl or 1-propynyl.

3. A compound according to claim 2, wherein $X_1$ is fluorine, chlorine or bromine, $R_1$ is hydrogen or cyano and $R_2$ is p-vinyl, p-1-propenyl, p-ethynyl, p-iodoethynyl or p-1-propynyl.

4. The compound according to claim 3 of the formula

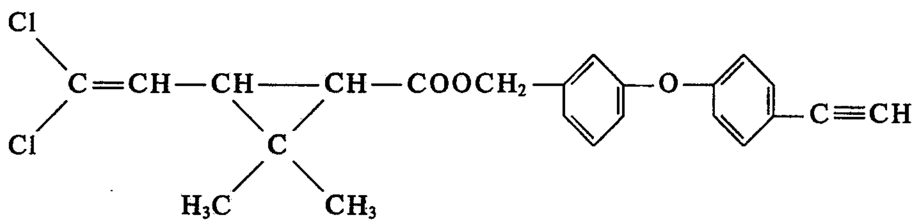

5. The compound according to claim 3 of the formula

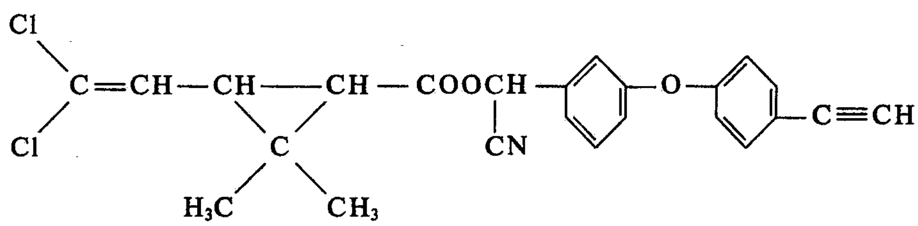

6. The compound according to claim 3 of the formula

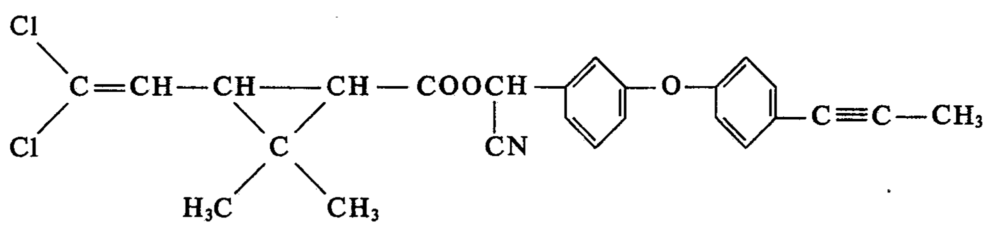

7. The compound according to claim 3 of the formula

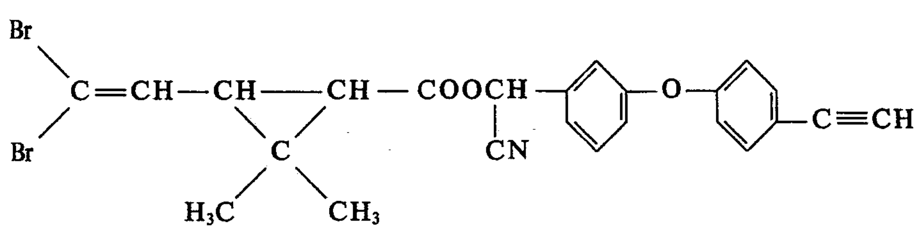

8. The compound according to claim 3 of the formula

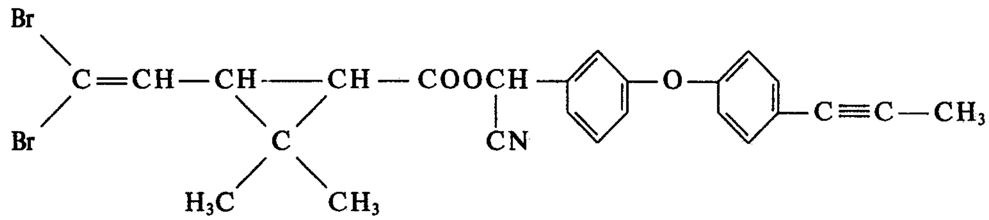

9. The compound according to claim 3 of the formula

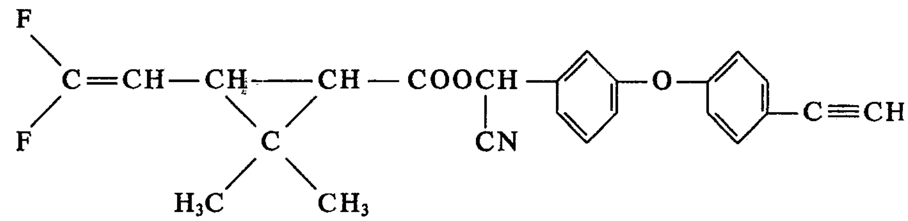

10. The compound according to claim 3 of the formula

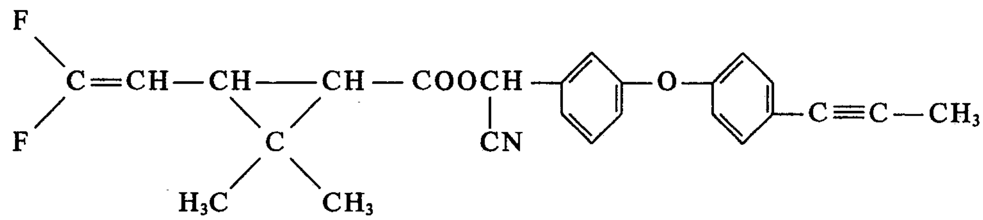

11. The compound according to claim 3 of the formula

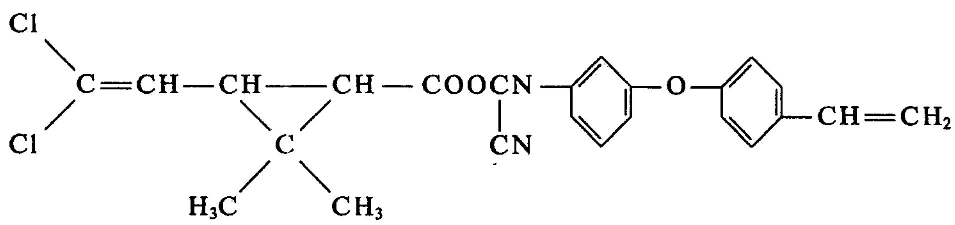

12. The compound according to claim 3 of the formula

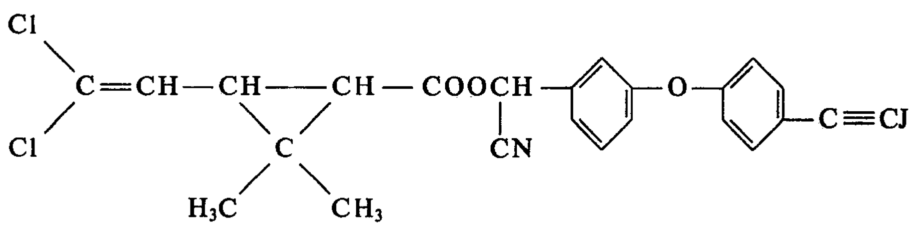

13. The compound according to claim 3 of the formula

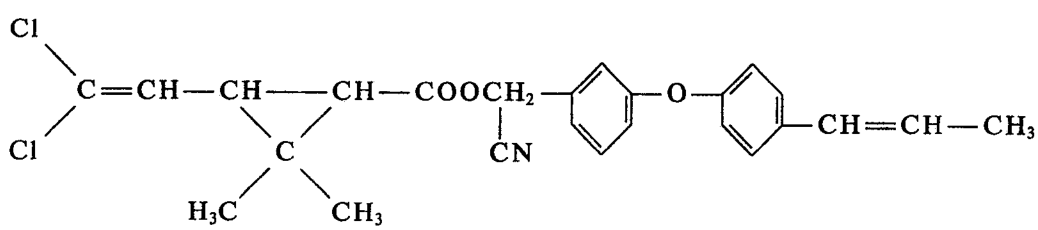

14. The compound according to claim 1 of the formula

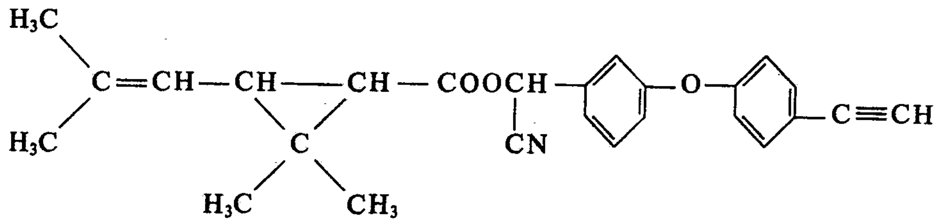

15. The compound according to claim 1 of the formula

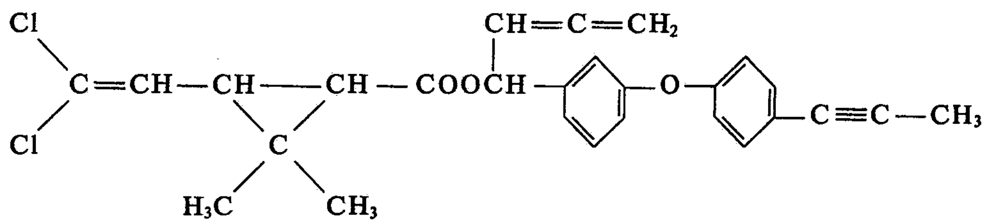

16. The compound according to claim 1 of the formula

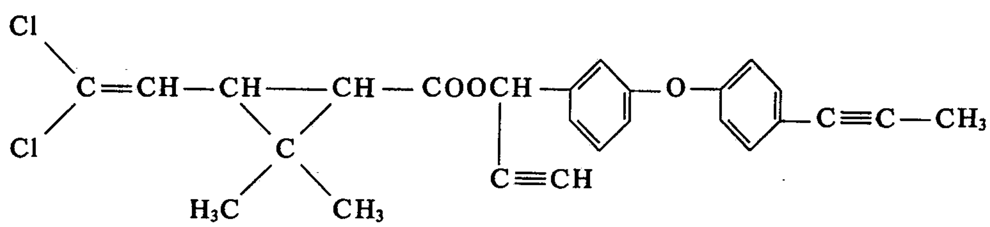

17. The compound according to claim 3 of the formula

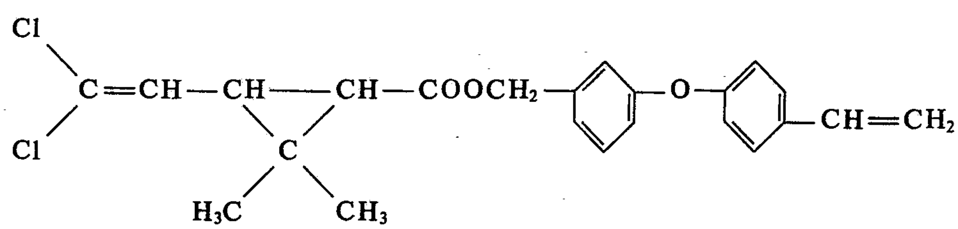

18. A process for the production of a compound according to claim 1, which process comprises reacting a compound of the formula

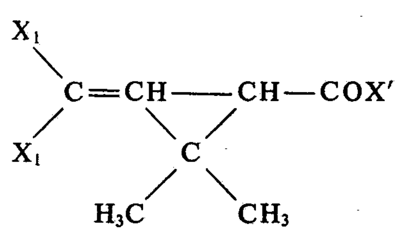

in the presence of an acid acceptor or a condensing agent, with a compound of the formula

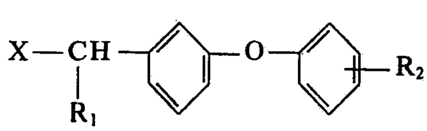

in which formulae $X_1$, $R_1$ and $R_2$ are as defined in claim 1 and each of X and X′ is a hydroxyl group or one of X and X′ is a hydroxyl group and the other is a halogen atom.

19. A pesticidal composition which contains, as active component, a compound according to claim 1.

20. A method of controlling pests of animals and plants, which comprises applying thereto a pesticidally effective amount of a compound according to claim 1.

21. A method according to claim 18, wherein the pests to be controlled are insects and representatives of the order Acarina.

**Revendications**

1. Esters d'acides cyclopropane-carboxyliques de formule

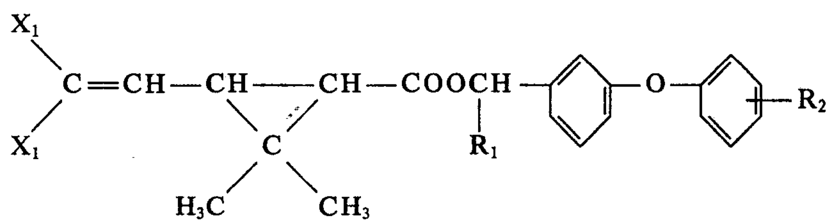

dans laquelle

$X_1$ représente un groupe méthyle ou un halogène,
$R_1$ représente l'hydrogène, un groupe cyano, $-CSNH_2$, alkyle, alcényle en C 2 – C 3 ou alcynyle en C 2 – C 3, et
$R_2$ représente un groupe alcényle en C 2 – C 6 ou alcynyle en C 2 – C 6 éventuellement substitué par un groupe cyano, le brome, l'iode, un groupe hydroxy, alkyle en C 1 – C 6, hydroxyalkyle en C 1 – C 6, halogénoalkyle en C 1 – C 6, diméthylamine ou phényle.

2. Un composé selon la revendication 1, dans lequel $X_1$ représente le fluor, le chlore ou le brome, $R_1$ représente l'hydrogène ou un groupe cyano et $R_2$ un groupe vinyle, 1-propényle, éthynyle, iodoéthynyle ou 1-propynyle.

3. Un composé selon la revendication 2, dans lequel $X_1$ représente le fluor, le chlore ou le brome, $R_1$ représente l'hydrogène ou un groupe cyano et $R_2$ un groupe p-vinyle, p-1-propényle, p-éthynyle, p-iodéthynyle ou p-1-propynyle.

4. Le composé selon la revendication 3, de formule

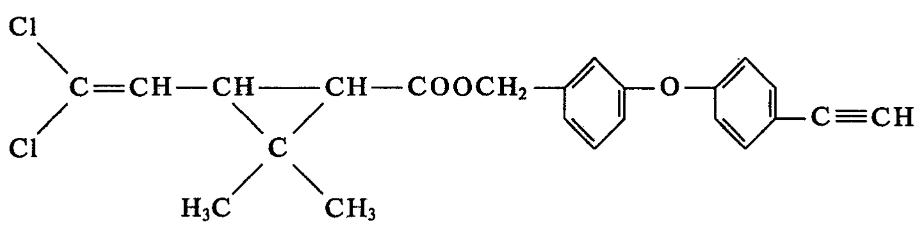

5. Le composé selon la revendication 3, de formule

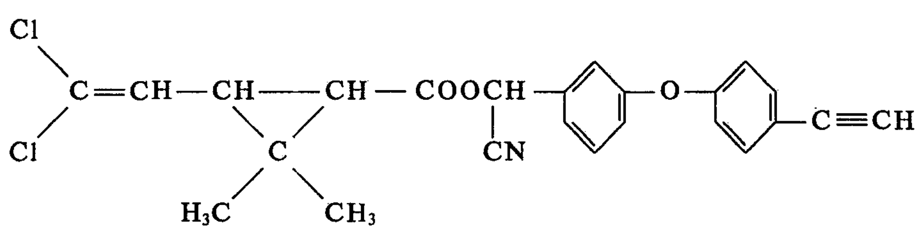

6. Le composé selon la revendication 3, de formule

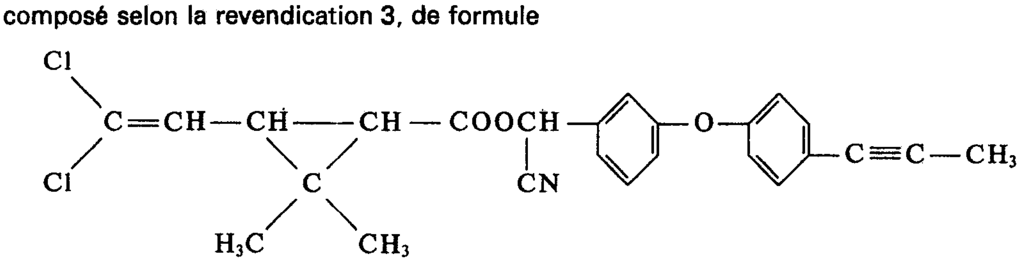

7. Le composé selon la revendication 3, de formule

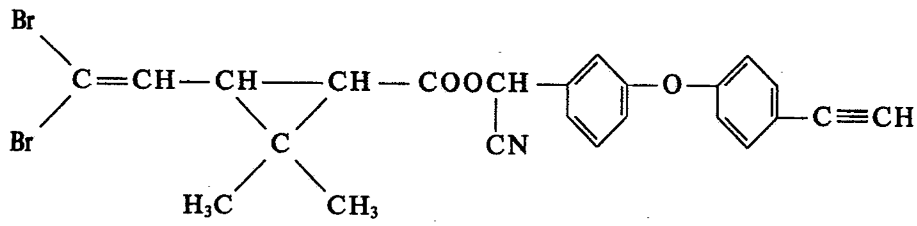

8. Le composé selon la revendication 3, de formule

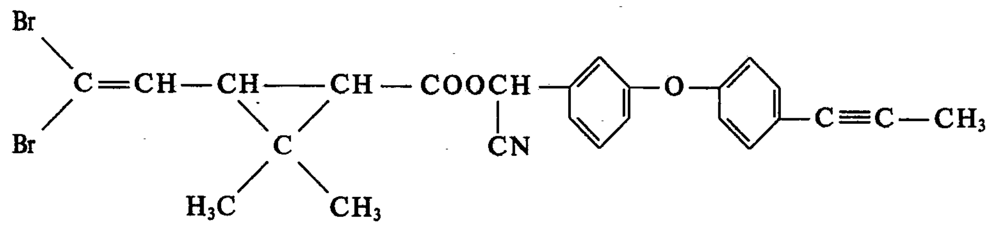

9. Le composé selon la revendication 3, de formule

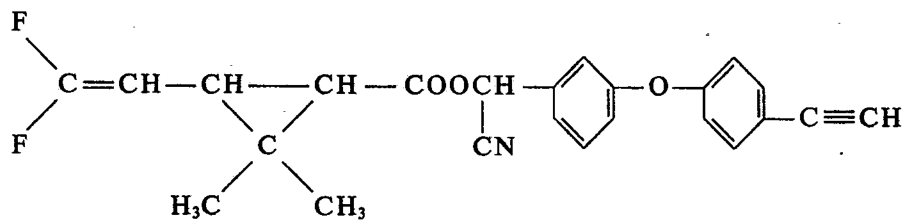

10. Le composé selon la revendication 3, de formule

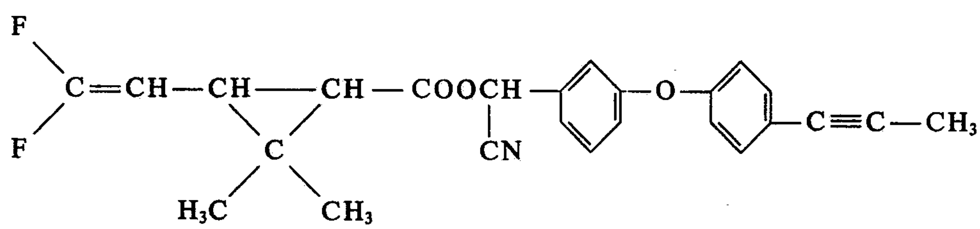

11. Le composé selon la revendication 3, de formule

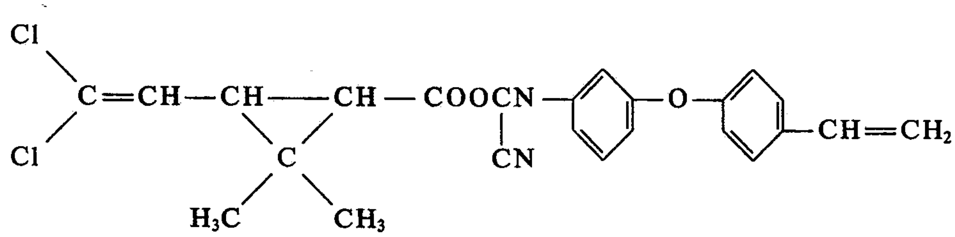

12. Le composé selon la revendication 3, de formule

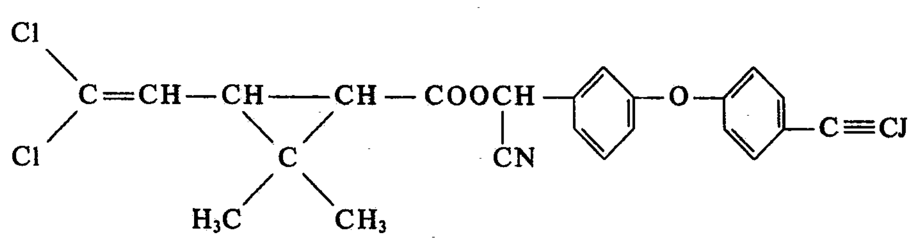

13. Le composé selon la revendication 3, de formule

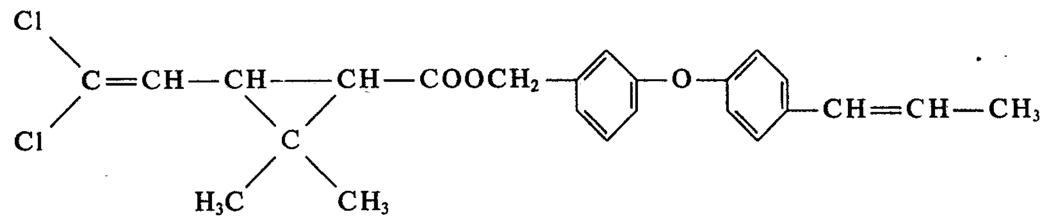

14. Le composé selon la revendication 1, de formule

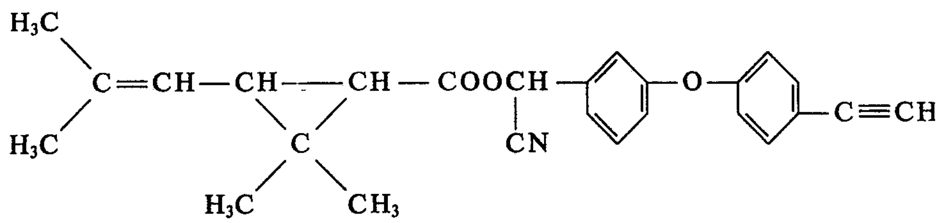

15. Le composé selon la revendication 1, de formule

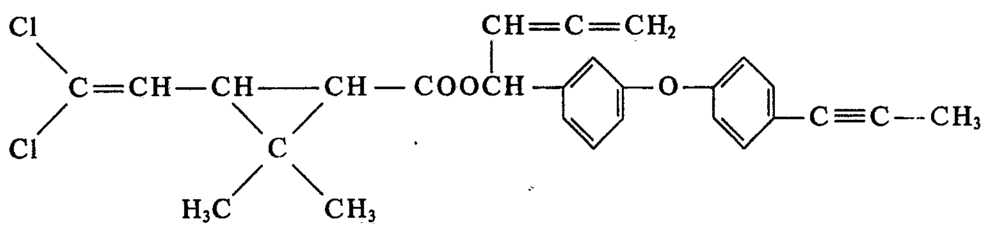

16. Le composé selon la revendication 1, de formule

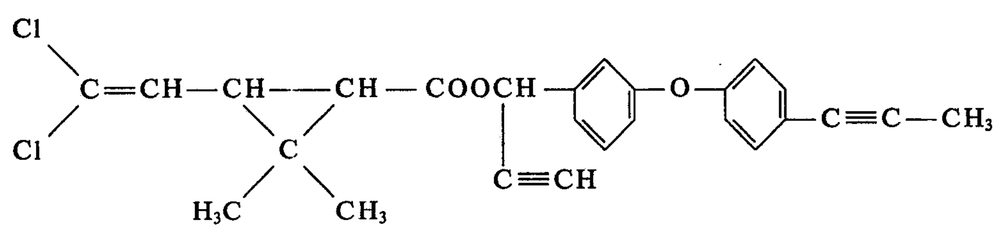

17. Le composé selon la revendication 3, de formule

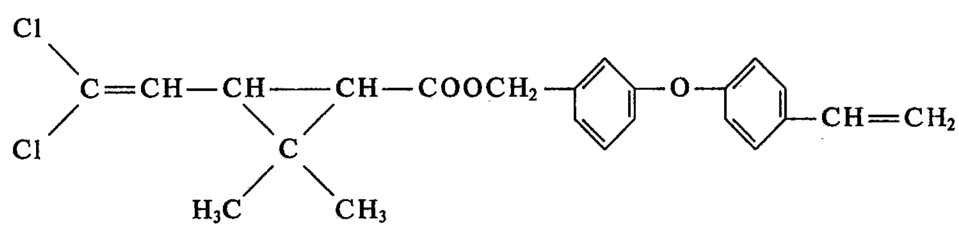

18. Un procédé de préparation des composés selon la revendication 1, caractérisé en ce que l'on fait réagir en présence d'un agent fixant les acides ou d'un agent déshydratent un composé de formule

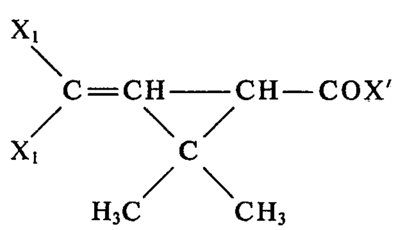

avec un composé de formule

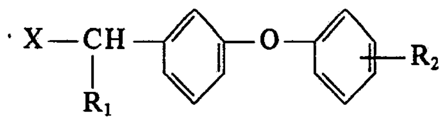

$X_1$, $R_1$ et $R_2$ ayant les significations indiquées dans la revendication 1 et X' et X représentant chacun un groupe hydroxy ou bien l'un de ces symboles représente un groupe hydroxy et l'autre un atome d'halogène.

19. Un pesticide contenant en tant que composant actif un composé selon la revendication 1.

20. L'utilisation d'un composé selon la revendication 1 pour la lutte contre les parasites des animaux et des végétaux.

21. L'utilisation selon la revendication 1, pour la lutte contre les insectes et les représentants de l'ordre des acariens.